(19) Europäisches Patentamt
European Patent Office
Office européen des brevets

(11) **EP 3 529 116 B1**

(12) **EUROPÄISCHE PATENTSCHRIFT**

(45) Veröffentlichungstag und Bekanntmachung des Hinweises auf die Patenterteilung:
**08.12.2021 Patentblatt 2021/49**

(21) Anmeldenummer: **17784645.8**

(22) Anmeldetag: **17.10.2017**

(51) Int Cl.:
***B60T 8/172*** *(2006.01)*

(86) Internationale Anmeldenummer:
**PCT/EP2017/076408**

(87) Internationale Veröffentlichungsnummer:
**WO 2018/073206 (26.04.2018 Gazette 2018/17)**

(54) **SCHÄTZVERFAHREN FÜR DEN REIBWERT EINES HYDRAULISCHEN BREMSSYSTEMS**

METHOD FOR ESTIMATING THE COEFFICIENT OF FRICTION OF A HYDRAULIC BRAKE SYSTEM

PROCÉDÉ D'ESTIMATION DE LA VALEUR DE FRICTION D'UN SYSTÈME DE FREINAGE HYDRAULIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.10.2016 DE 102016220415**

(43) Veröffentlichungstag der Anmeldung:
**28.08.2019 Patentblatt 2019/35**

(73) Patentinhaber: **Audi AG**
**85045 Ingolstadt (DE)**

(72) Erfinder:
• WEIN, Michael
  92358 Seubersdorf (DE)
• GEUSS, Matthias
  96149 Breitengüßbach (DE)

(56) Entgegenhaltungen:
EP-A2- 0 894 685    JP-A- H1 143 041
JP-A- 2009 168 239

**Beschreibung**

Die Erfindung betrifft ein Verfahren zur Schätzung des Reibwerts eines hydraulischen Bremssystems eines Kraftfahrzeugs. Außerdem betrifft die Erfindung ein Verfahren zur Anpassung des Soll-Bremsmoments eines hydraulischen Bremssystems eines Kraftfahrzeugs, um ein gewünschtes Ist-Bremsmoment zu erhalten.

Der Reibwert (auch unter Cp-Wert bekannt) eines hydraulischen Bremssystems zwischen Bremsbelag und Bremsscheibe bestimmt die Erzeugung von Bremsmoment und ist proportional zum Bremsdruck. Da nur der Bremsdruck gemessen werden kann, ist es für eine genaue Kenntnis des Bremsmoments an den Rädern wichtig, den Reibwert möglichst genau zu schätzen. Über die Messung der Fahrzeugverzögerung und des Bremsdrucks und unter Kenntnis der Fahrzeugparameter, z.B. der Fahrzeugmasse, kann auf den Reibwert zurückgerechnet werden. Es existiert auch ein Verfahren zur Reibwertschätzung, das ohne Kenntnis der Fahrzeugmasse auskommt, bei dem die Längsverzögerung durch die Reibbremse mit derjenigen durch eine E-Maschine, deren Moment genau bekannt ist, verglichen wird.

DE 35 02 050 A1 schlägt vor, als Kenngröße für das Bremsmoment die in der das Bremsmoment erzeugenden Bremseinrichtung entstehende Temperatur zu messen und in einer Auswerteeinrichtung auszuwerten.

DE 100 11 270 A1 offenbart ein Verfahren und eine Vorrichtung zur Ermittlung eines Kennwertes einer Radbremse, der den Zusammenhang zwischen Bremsmoment und Bremsdruck darstellt. Die Ermittlung des Bremsenkennwertes erfolgt radindividuell durch Berechnung auf der Basis von radspezifischen Größen wie Radschlupf, Radaufstandskraft, Radbremsdruck und Radradius.

DE 10 2014 226 290 lehrt ein Verfahren zur Einstellung oder zur Steuerung einer Bremsbetätigungsgröße BR(FZ), welche entweder die Zuspannkraft F oder der Bremsdruck PR oder der Zuspannweg X (xs) einer Kraftfahrzeugbremse mit mindestens einem gebremsten Rad R ist, innerhalb einer elektrohydraulischen oder elektromechanischen Fahrzeugbremse, die an einem Chassis des Fahrzeugs mit einem Bremshalter befestigt ist und über Reibbeläge das Rad nach Maßgabe der Bremsbetätigungsgröße BR(FZ) bremst, wobei die sich durch Kontakt des gebremsten Rades mit einer Fahrbahn ergebende Radumfangskraft F (FU) gemessen und eine Beeinflussung der Bremskraft F (FU) in Abhängigkeit der Steigung der Radumfangskraft F (ΔFU/Δs) durchgeführt wird, bei dem der Istwert der Regelung die Steigung der Radumfangskraft F (ΔFU /Δs) ist und diese durch Einstellen der Bremsbetätigungsgröße BR(FZ) auf einen vorgegebenen Sollwert TVR(OP(ΔFU/Δs)) oder einen Sollwertbereich TUR(OP(ΔFU/Δs) +/-R(ΔFU/Δs)) eingeregelt wird.

Aus DE 10 2010 043 320 A1 sind eine Vorrichtung und ein Verfahren zur Ermittlung einer Maßgröße für eine wirkende Reibkraft an einer Scheibenbremse eines Kraftfahrzeugs bekannt. Eine an der Scheibenbremse angeordnete Sensorvorrichtung misst eine durch die Bremskraftwirkung hervorgerufene Verschiebung des Bremshalters in einer Richtung senkrecht zur axialen Richtung der Bremsscheibe. Ein Maß für das wirkende Bremsmoment wird anhand der durch die Reibkraft hervorgerufenen Verformung des Bremshalters in einer Richtung tangential zur Bremsscheibenoberfläche ermittelt.

Aus der EP 0 894 685 A2 geht ein elektrisch betriebenes Bremssystem eines Kraftfahrzeugs mit einer Bremse mit einem Reibungselement hervor, das beweglich ist, um auf einen Rotor, der sich mit einem Fahrzeugrad dreht, gedrückt zu werden, und einem Elektromotor, der eine Antriebskraft erzeugt, um das Reibungselement auf den Rotor zu zwingen und dadurch das Rad zu bremsen. Anhand eines während des Bremsvorgangs von der Bremse auf das Rad ausgeübten Bremsmoments wird eine Beziehung zwischen der dem Motor zuzuführenden elektrischen Leistung und dem auf das Rad ausgeübten Bremsmoment auf der Grundlage der erhaltenen Istwerte abgeschätzt und in Abhängigkeit von einem Betätigungsbetrag des Bremsbetätigungselements zur Steuerung der dem Motor zuzuführenden elektrischen Leistung genutzt.

Die JP H11 43041 A betrifft die Verwendung der geschätzten Beziehung zwischen dem Kraftzufuhrwert und dem Bremsmomentwert, um eine Bremse zu steuern. Die Betätigungskraft eines Bremspedals wird einer Steuerung zugeführt, die entsprechend der Betätigungskraft einen Stromwert an die Motoren liefert. Die Motoren liefern gemäß dem zugeführten Stromwert eine Antriebskraft an ein Reibungselement. Das Reibungselement überträgt unter seinem tatsächlichen Reibungskoeffizienten ein Bremsmoment auf ein Rad und erzeugt eine Verzögerung G. Der tatsächliche Bremsmomentwert jedes Rades wird auf der Grundlage der Verzögerung G während des Betriebs der Bremsen gewonnen.

Die JP 2009 168239 A offenbart eine Servo-Bremsvorrichtung, die in der Lage ist, Servo-Funktionen von Aktuatoren mit geringer Kapazität unter allen Bedingungen zu gewährleisten und die Servo-Leistung auch während der Rückwärtsfahrt sicherzustellen. Dazu ist die Bremsvorrichtung mit einem Servomechanismus zum Erhöhen der Druckkraft auf einen Scheibenrotor mit einem inneren Belag versehen. Die Rotationstangente des Scheibenrotors wird durch die Aktuatoren und aufgrund der Reibungskraft des inneren Belags und des Scheibenrotors mitgedreht. Der variable Servomechanismus kann ein Servoverhältnis einstellen, um eine geeignete und stabile Steuerkraft zu erhalten, selbst wenn sich der Reibungskoeffizient zwischen dem inneren Belag und einem äußeren Belag ändert.

Vor diesem Hintergrund bestand die Aufgabe, ein neues Verfahren zur Schätzung des Reibwerts eines hydraulischen Bremssystems eines Kraftfahrzeugs zur Verfügung zu stellen, die ohne eine Verwendung von Fahrzeugparametern, beispielsweise einer Fahrzeugmasse, auskommen.

Im Rahmen der vorliegenden Erfindung wird ein neues Verfahren zur Schätzung eines Reibwerts eines hydraulischen Bremssystems eines Kraftfahrzeugs mit den Merkmalen des Anspruchs 1 vorgestellt. Ausführungsformen ergeben sich aus den abhängigen Ansprüchen und der Beschreibung.

Daneben wird ein Verfahren mit den Merkmalen des Anspruchs 4 zur Anpassung eines Soll-Bremsmoments eines hydraulischen Bremssystems eines Kraftfahrzeugs, um ein gewünschtes Ist-Bremsmoment zu erhalten, vorgestellt. Ausführungsformen ergeben sich aus den abhängigen Ansprüchen und der Beschreibung und den Zeichnungen.

Die Erfindung ist anhand von Ausführungsformen in den Zeichnungen schematisch dargestellt und wird unter Bezugnahme auf die Zeichnungen schematisch und ausführlich beschrieben. Es zeigt:

Figur 1 ein Flussdiagramm des erfindungsgemäßen Verfahrens zur Schätzung des Reibwerts eines hydraulischen Bremssystems eines Kraftfahrzeugs, in dem die Verfahrensschritte und Datenflüsse illustriert sind;

Figur 2 ein Flussdiagramm des erfindungsgemäßen Verfahrens zur Anpassung des Soll-Bremsmoments eines hydraulischen Bremssystems eines Kraftfahrzeugs, um ein gewünschtes Ist-Bremsmoment zu erhalten, in dem die Verfahrensschritte und Datenflüsse illustriert sind.

Die Erfindung stellt eine Lösung zur Schätzung des Reibwerts eines hydraulischen Bremssystems eines Kraftfahrzeugs bereit, die ohne die Verwendung von Fahrzeugparametern, beispielsweise der Fahrzeugmasse, auskommt. Im Rahmen der Erfindung können Stell- und Messsysteme verwendet werden, die in der Regel im Fahrzeug vorhanden sind. Weitere Vorteile und Ausgestaltungen der Erfindung ergeben sich aus der nachfolgenden Beschreibung.

Ein zur Durchführung des Verfahrens geeignetes System umfasst mindestens ein hydraulisches Bremssystem, das auf ein Rad oder eine Achse des Kraftfahrzeugs einwirkt; sowie mindestens ein weiteres Aktorsystem, welches mit einer höheren Stellgenauigkeit als das hydraulische Bremssystem ein Bremsmoment an dem Rad bzw. der Achse aufbringen kann. Ferner umfasst das System mindestens einen Sensor und eine Einheit zur Berechnung eines geschätzten Reibwerts aus den Sensordaten.

In einer Ausführungsform umfasst das weitere Aktorsystem mindestens einen Achsmotor. In einer anderen Ausführungsform umfasst das weitere Aktorsystem mindestens einen EM-Einzelradmotor.

In dem System ist mindestens ein geeigneter Sensor enthalten. In einer Ausführungsform umfasst das System mindestens einen Raddrehzahlsensor. In einer weiteren Ausführungsform umfasst das System mindestens einen Radgeschwindigkeitssensor. In einer weiteren Ausführungsform umfasst das System mindestens einen Bremsdrucksensor.

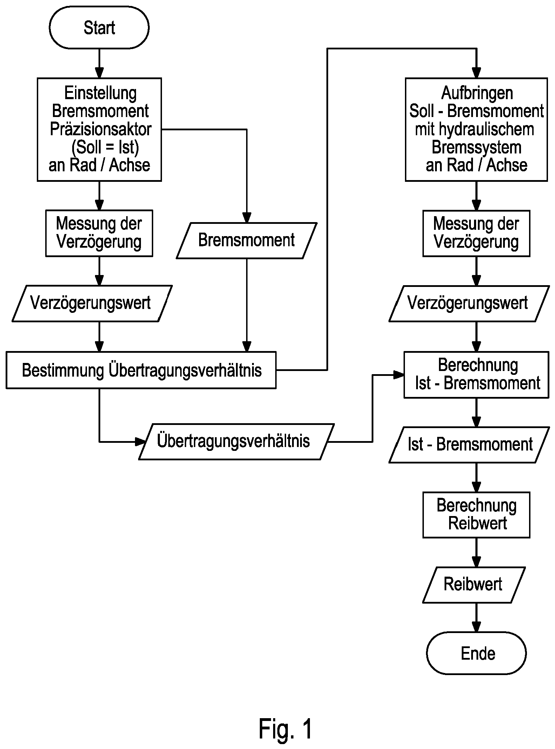

Das erfindungsgemäße Verfahren zur Schätzung des Reibwerts eines hydraulischen Bremssystems eines Kraftfahrzeugs umfasst die folgenden Schritte: Es wird über ein Aktorsystem mit hoher Stellgenauigkeit ein Bremsmoment (Soll=Ist) am Rad bzw. der Achse eingestellt, die durch das Bremsmoment bewirkte Radverzögerung gemessen und das Übertragungsverhalten zwischen Bremsmoment und Radverzögerung bestimmt. Es wird über das hydraulische Bremssystem ein Soll-Bremsmoment am Rad bzw. der Achse aufgebracht und die Radverzögerung gemessen. Damit können mit dem inversen Übertragungsverhalten zwischen Bremsmoment und Radverzögerung das Ist-Bremsmoment und damit der Ist-Reibwert des hydraulischen Bremssystems berechnet werden. Wenn die Radbremsen an einer Achse gekoppelt sind, z.B. hydraulisch, so entspricht das Bremsmoment am Rad der Hälfte des Bremsmoments an der Achse. Wenn die Achsen über das Bremssystem gekoppelt sind, z.B. über die hydraulisch installierte Verteilung, so kann mit dieser Verteilung und dem Gesamtbremsmoment das Bremsmoment an der entsprechenden Achse berechnet werden. Zur Verdeutlichung ist der Ablauf des erfindungsgemäßen Verfahrens in Figur 1 auch als Flussdiagramm dargestellt, in dem die einzelnen Verfahrensschritte und die Datenflüsse eingezeichnet sind.

Durch den unbekannten Reibwert des Bremssystems weicht das Soll-Bremsmoment meist vom Ist-Bremsmoment ab. Es sind weitere Aktorsysteme (z.B. EM-Einzelradmotoren, EM-Achsmotor) bekannt, welche mit einer höheren Stellgenauigkeit als das Bremssystem ein Bremsmoment aufbringen können. Das Soll-Bremsmoment entspricht also gut dem Ist-Bremsmoment. Es wird über ein Aktorsystem mit hoher Stellgenauigkeit ein Bremsmoment am Rad bzw. der Achse gestellt (Soll-Bremsmoment = Ist-Bremsmoment) und die Radverzögerung gemessen und das Übertragungsverhalten zwischen Bremsmoment und Radverzögerung bestimmt. Es wird über das hydraulische Bremssystem ein Soll-Bremsmoment aufgebracht und die Radverzögerung gemessen und mit dem inversen Übertragungsverhalten zwischen Bremsmoment und Radverzögerung auf das Ist-Moment der Reibbremse am Rad bzw. der Achse geschlossen. Unter Kenntnis des Soll-Moments und des Nennreibwerts kann auf den Ist-Reibwert zurückgeschlossen werden:

$$\text{Ist-Reibwert} = \text{Ist-Bremsmoment} \,/\, \text{Soll-Bremsmoment} * \text{Nennreibwert}.$$

Alternativ kann über eine Messung des Bremsdrucks der Ist-Reibwert berechnet werden:

$$\text{Ist-Reibwert = Ist-Bremsmoment / Bremsdruck.}$$

Eine weitere im Rahmen der vorliegenden Erfindung gelöste Aufgabe besteht darin, ein gewünschtes Ist-Bremsmoment mit einem hydraulischen Bremssystem an einem Rad bzw. einer Achse einzustellen. In diesem Fall interessiert man sich nicht für den Reibwert, sondern für das Verhältnis zwischen dem Soll- und Ist-Bremsmoment des hydraulischen Bremssystems. Mit diesem Faktor kann man das Soll-Bremsmoment des hydraulischen Bremssystems dann multiplizieren, um das gewünschte Bremsmoment am Rad zu bekommen. Dazu bestimmt man, wie oben, das Ist-Bremsmoment des Bremssystems am Rad bzw. der Achse und bezieht es auf das Soll-Bremsmoment des Bremssystems am Rad bzw. der Achse.

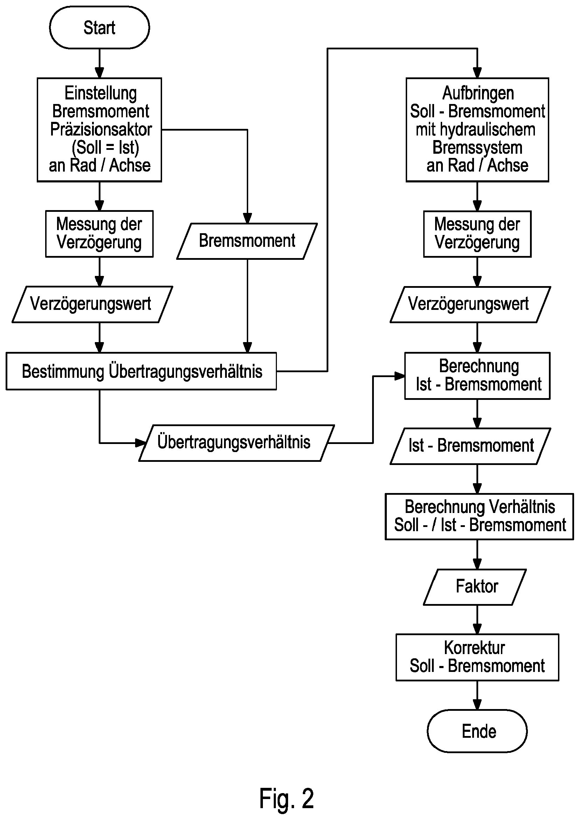

Gegenstand der Erfindung ist daher auch ein Verfahren zur Anpassung des Soll-Bremsmoments eines hydraulischen Bremssystems eines Kraftfahrzeugs zur Erreichung eines gewünschten Ist-Bremsmoments. Das gewünschte Ist-Bremsmoment entspricht dabei dem ursprünglichen Soll-Bremsmoment. Das Verfahren umfasst das Einstellen eines Bremsmoments an einem Rad oder einer Achse des Kraftfahrzeugs über ein Aktorsystem, welches eine höhere Stellgenauigkeit aufweist als das hydraulische Bremssystem und die Messung der durch das Bremsmoment bewirkten Verzögerung des Rades oder der Achse mit anschließender Bestimmung des Übertragungsverhaltens zwischen Bremsmoment und Verzögerung des Rades oder der Achse. Weiterhin umfasst das Verfahren das Aufbringen eines Soll-Bremsmoments an dem Rad oder der Achse des Kraftfahrzeugs über das hydraulische Bremssystem, die Messung der durch das Bremsmoment bewirkten Verzögerung des Rades oder der Achse und die Schätzung des Ist-Bremsmoments über das Inverse des Übertragungsverhaltens zwischen Bremsmoment und Verzögerung des Rades oder der Achse. Es wird dann das Verhältnis zwischen dem Soll- und Ist-Bremsmoment des hydraulischen Bremssystems berechnet und das Soll-Bremsmoment des hydraulischen Bremssystems mit dem erhaltenen Faktor multipliziert, um ein Soll-Bremsmoment zu erhalten, das ein Ist-Bremsmoment erzeugt, welches dem ursprünglichen Soll-Bremsmoment entspricht. Zur Verdeutlichung ist der Ablauf des erfindungsgemäßen Verfahrens in Figur 2 auch als Flussdiagramm dargestellt, in dem die einzelnen Verfahrensschritte und die Datenflüsse eingezeichnet sind.

Weiterhin wird ein System vorgestellt, das geeignet ist zur Anpassung des Soll-Bremsmoments eines hydraulischen Bremssystems eines Kraftfahrzeugs, um ein gewünschtes Ist-Bremsmoment zu erhalten. Das gewünschte Ist-Bremsmoment entspricht dabei dem ursprünglichen Soll-Bremsmoment. Das System umfasst mindestens ein hydraulisches Bremssystem, das auf ein Rad oder eine Achse des Kraftfahrzeugs einwirkt, und mindestens ein weiteres Aktorsystem, welches mit einer höheren Stellgenauigkeit als das hydraulische Bremssystem ein Bremsmoment an dem Rad bzw. der Achse aufbringen kann. Das System umfasst auch mindestens einen Sensor, eine Einheit zur Berechnung eines Ist-Bremsmoments aus den Sensordaten, und eine Einheit zur Veränderung des Soll-Bremsmoments des hydraulischen Bremssystems.

Beispiele für geeignete weitere Aktorsysteme schließen Achsmotoren und EM-Einzelradmotoren ein. Geeignete Sensoren sind beispielsweise Raddrehzahlsensoren, Radgeschwindigkeitssensoren, oder Bremsdrucksensoren.

## Patentansprüche

1. Verfahren zur Schätzung eines Reibwerts eines hydraulischen Bremssystems eines Kraftfahrzeugs, umfassend die Schritte:

   a) Einstellen eines Bremsmoments an einem Rad oder einer Achse des Kraftfahrzeugs über ein Aktorsystem, welches eine höhere Stellgenauigkeit aufweist als das hydraulische Bremssystem;
   b) Messung der durch das Bremsmoment bewirkten Verzögerung des Rades oder der Achse;
   c) Bestimmung des Übertragungsverhaltens zwischen Bremsmoment und Verzögerung des Rades oder der Achse;
   d) Aufbringen eines Soll-Bremsmoments an dem Rad oder der Achse des Kraftfahrzeugs über das hydraulische Bremssystem;
   e) Messung der durch das Bremsmoment bewirkten Verzögerung des Rades oder der Achse;
   f) Abschätzen des Ist-Bremsmoments über das Inverse des in Schritt c) bestimmten Übertragungsverhaltens zwischen Bremsmoment und Verzögerung des Rades oder der Achse;
   g) Berechnung des Ist-Reibwertes des hydraulischen Bremssystems.

2. Verfahren nach Anspruch 1, bei dem der Reibwert aus dem Soll-Bremsmoment und dem Ist-Bremsmoment und dem Nennreibwert des hydraulischen Bremssystems berechnet wird gemäß

$$\text{Reibwert = Ist-Bremsmoment / Soll-Bremsmoment * Nennreibwert.}$$

3. Verfahren nach Anspruch 1, bei dem der Reibwert aus dem Ist-Bremsmoment und dem Bremsdruck des hydraulischen Bremssystems berechnet wird gemäß

$$\text{Reibwert = Ist-Bremsmoment / Bremsdruck.}$$

4. Verfahren zur Anpassung eines Soll-Bremsmoments eines hydraulischen Bremssystems eines Kraftfahrzeugs, um ein gewünschtes Ist-Bremsmoment zu erzielen, umfassend die Schritte:

a) Einstellen eines Bremsmoments an einem Rad oder einer Achse des Kraftfahrzeugs über ein Aktorsystem, welches eine höhere Stellgenauigkeit aufweist als das hydraulische Bremssystem;
b) Messung der durch das Bremsmoment bewirkten Verzögerung des Rades oder der Achse;
c) Bestimmung des Übertragungsverhaltens zwischen Bremsmoment und Verzögerung des Rades oder der Achse;
d) Aufbringen eines Soll-Bremsmoments an dem Rad oder der Achse des Kraftfahrzeugs über das hydraulische Bremssystem;
e) Messung der durch das Bremsmoment bewirkten Verzögerung des Rades oder der Achse;
f) Abschätzen des Ist-Bremsmoments über das Inverse des in Schritt c) bestimmten Übertragungsverhaltens zwischen Bremsmoment und Verzögerung des Rades oder der Achse;
g) Berechnung des Verhältnisses zwischen dem Soll- und Ist-Bremsmoment des hydraulischen Bremssystems;
h) Multiplizieren des Soll-Bremsmoments des hydraulischen Bremssystems mit dem erhaltenen Faktor, um ein dem gewünschten Ist-Bremsmoment entsprechendes Soll-Bremsmoment zu erhalten.

## Claims

1. Method for estimating a coefficient of friction of a hydraulic brake system in a motor vehicle, comprising the steps:

a) setting a braking torque on a wheel or an axle of the motor vehicle by means of an actuator system which has a higher control precision than the hydraulic brake system;
b) measuring the deceleration of the wheel or axle induced by the braking torque;
c) determining the transmission ratio between the braking torque and the deceleration of the wheel or axle;
d) applying a set braking torque to the wheel or axle of the motor vehicle via the hydraulic brake system;
e) measuring the deceleration of the wheel or axle induced by the braking torque;
f) estimating the actual braking torque on the basis of the inverse of the transmission ratio between the braking torque and the deceleration of the wheel or axle, as determined in step c);
g) calculating the actual coefficient of friction of the hydraulic brake system.

2. Method according to claim 1, in which the coefficient of friction is calculated from the set braking torque and the actual breaking torque and the nominal coefficient of friction of the hydraulic brake system according to

$$\text{coefficient of friction = actual braking torque / set braking torque * nominal}$$
$$\text{coefficient of friction.}$$

3. Method according to claim 1, in which the coefficient of friction is calculated from the actual braking torque and the brake pressure of the hydraulic brake system according to

$$\text{coefficient of friction = actual braking torque / brake pressure.}$$

4. Method for adjusting a set braking torque of a hydraulic brake system of a motor vehicle to achieve a desired actual braking torque, comprising the steps:

a) setting a braking torque on a wheel or an axle of the motor vehicle by means of an actuator system which has a higher control precision than the hydraulic brake system;

b) measuring the deceleration of the wheel or axle induced by the braking torque;

c) determining the transmission ratio between the braking torque and the deceleration of the wheel or axle;

d) applying a set braking torque to the wheel or axle of the motor vehicle via the hydraulic brake system;

e) measuring the deceleration of the wheel or axle induced by the braking torque;

f) estimating the actual braking torque on the basis of the inverse of the transmission ratio between the braking torque and the deceleration of the wheel or axle, as determined in step c);

g) calculating the ratio between the set braking torque and the actual braking torque of the hydraulic brake system;

h) multiplying the set braking torque of the hydraulic brake system by the resulting factor to obtain a set braking torque that corresponds to the desired actual braking torque.

**Revendications**

1. Procédé d'estimation d'un coefficient de friction d'un système de freinage hydraulique d'un véhicule automobile, comprenant les étapes de :

   a) Réglage d'un couple de freinage sur une roue ou un essieu du véhicule automobile par le biais d'un système d'actionneur, lequel présente une précision de réglage plus élevée que celle du système de freinage hydraulique ;

   b) Mesure de décélération de la roue ou de l'essieu provoquée par le couple de freinage ;

   c) Détermination du comportement de transmission entre le couple de freinage et la décélération de la roue ou de l'essieu ;

   d) Application d'un couple de freinage théorique à la roue ou à l'essieu du véhicule automobile par le biais du système de freinage hydraulique ;

   e) Mesure de décélération de la roue ou de l'essieu provoquée par le couple de freinage ;

   f) Estimation du couple de freinage réel par le biais de l'inverse du comportement de transmission entre le couple de freinage et la décélération de la roue ou de l'essieu déterminé à l'étape c) ;

   g) Calcul du coefficient de friction réel du système de freinage hydraulique.

2. Procédé selon la revendication 1, dans lequel le coefficient de friction est calculé à partir du couple de freinage théorique et du couple de freinage réel et du coefficient de friction nominal du système de freinage hydraulique selon

   Coefficient de friction = couple de freinage réel/couple de freinage théorique*coefficient de friction nominal.

3. Procédé selon la revendication 1, dans lequel le coefficient de friction est calculé à partir du couple de freinage réel et de la pression de freinage du système de freinage hydraulique selon

   Coefficient de friction = couple de freinage réel/pression de freinage.

4. Procédé d'adaptation d'un couple de freinage théorique d'un système de freinage hydraulique d'un véhicule automobile pour atteindre un couple de freinage réel souhaité, comprenant les étapes de :

   a) Réglage d'un couple de freinage sur une roue ou un essieu du véhicule automobile par le biais d'un système d'actionneur, lequel présente une précision de réglage plus élevée que celle du système de freinage hydraulique ;

   b) Mesure de décélération de la roue ou de l'essieu provoquée par le couple de freinage ;

   c) Détermination du comportement de transmission entre le couple de freinage et la décélération de la roue ou de l'essieu ;

   d) Application d'un couple de freinage théorique à la roue ou à l'essieu du véhicule automobile par le biais du système de freinage hydraulique ;

   e) Mesure de décélération de la roue ou de l'essieu provoquée par le couple de freinage ;

   f) Estimation du couple de freinage réel par le biais de l'inverse du comportement de transmission entre le couple de freinage et la décélération de la roue ou de l'essieu déterminé à l'étape c) ;

   g) Calcul du comportement entre le couple de freinage théorique et réel du système de freinage hydraulique ;

h) Multiplication du couple de freinage théorique du système de freinage hydraulique par le facteur obtenu afin d'obtenir un couple de freinage théorique correspondant au couple de freinage réel souhaité.

```
                                 ┌─────────┐
                                 │  Start  │
                                 └────┬────┘
                                      │
                                      ▼
┌──────────────────────┐                                    ┌──────────────────────┐
│     Einstellung      │                                    │      Aufbringen       │
│     Bremsmoment      │                                    │   Soll - Bremsmoment  │
│    Präzisionsaktor   │                                    │    mit hydraulischem  │
│     (Soll = Ist)     │                                    │       Bremssystem     │
│     an Rad / Achse   │                                    │     an Rad / Achse    │
└──────────┬───────────┘                                    └───────────┬──────────┘
           │                                                            │
           ▼                       ┌──────────────┐                     ▼
┌──────────────────────┐           │  Bremsmoment │          ┌──────────────────────┐
│     Messung der      │           └──────┬───────┘          │      Messung der      │
│      Verzögerung     │                  │                  │       Verzögerung     │
└──────────┬───────────┘                  │                  └───────────┬──────────┘
           │                              │                              │
           ▼                              │                              ▼
┌──────────────────────┐                  │                  ┌──────────────────────┐
│   Verzögerungswert   │                  │                  │    Verzögerungswert   │
└──────────┬───────────┘                  │                  └───────────┬──────────┘
           │                              │                              │
           ▼                              ▼                              ▼
┌─────────────────────────────────────────┐                  ┌──────────────────────┐
│  Bestimmung Übertragungsverhältnis      │                  │       Berechnung      │
└──────────────────┬──────────────────────┘                  │    Ist - Bremsmoment  │
                   │                                          └───────────┬──────────┘
                   ▼                                                      │
         ┌──────────────────────┐                                        ▼
         │ Übertragungsverhältnis│                            ┌──────────────────────┐
         └──────────────────────┘                            │    Ist - Bremsmoment  │
                                                             └───────────┬──────────┘
                                                                         │
                                                                         ▼
                                                             ┌──────────────────────┐
                                                             │       Berechnung      │
                                                             │        Reibwert       │
                                                             └───────────┬──────────┘
                                                                         │
                                                                         ▼
                                                             ┌──────────────────────┐
                                                             │       Reibwert        │
                                                             └───────────┬──────────┘
                                                                         │
                                                                         ▼
                                                                  ┌─────────┐
                                                                  │   Ende  │
                                                                  └─────────┘
```

Fig. 1

Start

Einstellung
Bremsmoment
Präzisionsaktor
(Soll = Ist)
an Rad / Achse

Messung der
Verzögerung

Bremsmoment

Verzögerungswert

Bestimmung Übertragungsverhältnis

Übertragungsverhältnis

Aufbringen
Soll - Bremsmoment
mit hydraulischem
Bremssystem
an Rad / Achse

Messung der
Verzögerung

Verzögerungswert

Berechnung
Ist - Bremsmoment

Ist - Bremsmoment

Berechnung Verhältnis
Soll - / Ist - Bremsmoment

Faktor

Korrektur
Soll - Bremsmoment

Ende

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3502050 A1
- DE 10011270 A1
- DE 102014226290
- DE 102010043320 A1
- EP 0894685 A2
- JP H1143041 A
- JP 2009168239 A